# EUROPEAN PATENT APPLICATION

(11) **EP 4 432 713 A1**
(43) Date of publication of application: **18.09.2024**
(21) Application number: 23305356.0
(22) Date of filing: 16.03.2023
(51) Int. Cl.: H04W 12/30, H04W 12/42, H04W 12/45, H04L 67/06, H04L 67/303, H04L 67/306, H04W 8/20, H04W 4/70

(54) **A METHOD FOR DOWNLOADING A PROFILE FROM A SM-DP+ TO A SECURE ELEMENT**

(71) Applicant: THALES DIS FRANCE SAS, 92190 Meudon (FR)
(72) Inventor: KATACHADOURIAN, Alain, 13120 GARDANNE (FR); PERRET, Davy, 83330 LE BEAUSSET (FR); ZAITI, Reda, 13600 LA CIOTAT (FR); SCHNEIDER, David, 83140 SIX FOURS LES PLAGES (FR)
(74) Representative: Scheer, Luc

(57) **Abstract**

The invention concerns a method for downloading an entire profile from a SM-DP+ 10 to a secure element 12 cooperating with a terminal, the secure element or the terminal comprising a LPA 11, wherein the method comprises:
a - Sending from the LPA 11 to the SM-DP+ 10 a request to download a first range of data of the entire profile;
b - Downloading from the SM-DP+ 10 to the LPA 11 the first range of data of the entire profile;
c - Storing the first range of data of the entire profile in the secure element 12;
d - Sending from the LPA 11 to the SM-DP+ 10 a request to download the next range of data of the entire profile;
e - Downloading from the SM-DP+ 10 to the LPA 11 the next range of data of the entire profile;
f - Sending from the LPA 11 to the secure element 12 the next range of data of the entire profile;
g- Repeating steps -d- to -f- until the entire profile has been downloaded in the secure element 12.

## Description

The present invention concerns telecommunications and in particular the download of a profile (including a subscription to a telecommunication operator (MNO)) in a secure element cooperating with a terminal.

The terminal can be for example an IoT device or a consumer product like modem embedding a LPA, a PDA or a connected watch for example.

The secure element can be a UICC, an eUICC (embedded UICC) or an iUICC (integrated UICC).

The GSMA has defined how a profile can be downloaded in a secure element, in particular in an eUICC.

There are three main GSMA-compliant eSIM architecture components:
- The eUICC is a hardware device that acts as a secure container to store the eSIM profile into the device.
- The eSIM profile stores the user's subscription and network settings and allows the user to connect to the corresponding mobile network.
- The operator's Subscription Manager Data Preparation platform (aka SM-DP+, i.e., the eSIM subscription management server) aims at securely downloading the eSIM profile it stores onto the eUICC. Once the operator's BSS (Base Station Subsystem) creates the subscription, it informs the SM-DP+ about its availability and requires completing an eSIM profile.

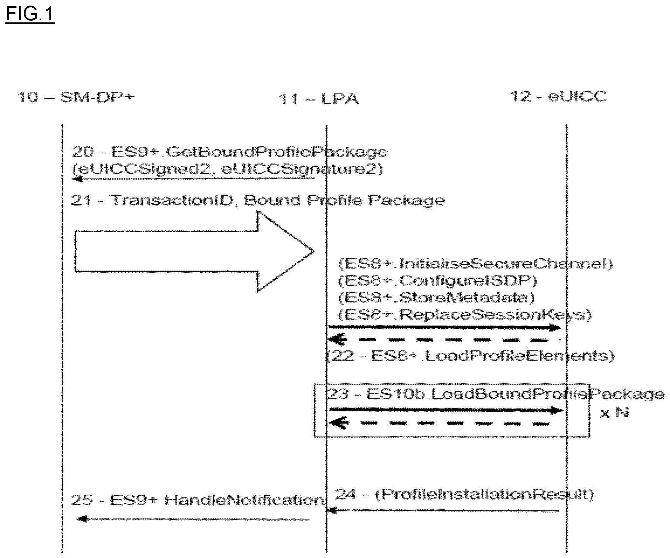

Figure 1 represents a solution for downloading a profile in a eUICC. This solution is described in the GSMA document entitled "RSP Technical Specification, version 2.3, June 30 2021", in the GSMA RSP Technical Specification Version 2.0, 14 October 2016 or in the IoT standard SGP .32 not published yet (eSIM loT TS Version 1.0).

As explained before, three entities are necessary:
- A SM-DP+ and/or elM (eSIM Remote Manager) 10,
- A LPA 11 (Local Profile Assistant) or an IPA (lot Profile Assistant) or a LPAe (LPA located in a eUICC) or an IPAe (IPA located in a eUICC),
- A secure element 12 (here an eUICC).

The LPA 11 can be comprised in the eUICC 12 or in the terminal comprising the secure element.

In the following description, the term SM-DP+ is a generic term encompassing an elM, the term LPA encompasses an IPA or an IPAe or a LPAe.

The mentioned TS define what is a Profile Package (a package comprising a profile). From generation to download, the Profile Package takes different formats:
- Unprotected Profile Package (UPP): A Raw Profile Element TLV sequence.
- Protected Profile Package (PPP): Segmented and protected in SCP03t TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into the eUICC.

The first step 20 consists in requesting, from the LPA 11 to the SM-DP+ 10, the download of a profile. This is performed on the ES9+ interface between the LPA 11 (more specifically the LPD endpoint) and the SM-DP+ 10 (more specifically the Profile Package Delivery endpoint).

The LPA 11 supports all the functions related to download a profile and install this profile via the LPA's Local Profile Download (LPD) functions. In the figure, the term "LPA" is thus equivalent to "LPD".

At this first step 20, the LPA 11 sends the following request to the SM-DP+ 10:
GetBoundProfilePackage (eUICCSigned2, eUICCSignature2)

This request is thus signed by the eUICC 12.

By receiving this request, the SM-DP+ 10 answers at step 21 by providing a TransactionlD and a Bound Profile Package. The Bound Profile Package is generated by the SM-DP+ 10, within the Profile Package Binding function. The purpose of this operation is to link a Protected Profile Package to a particular eUICC. This is done within a key agreement between the eUICC 12 and the SM-DP+ 10. The Bound Profile Package comprises a sequence of TLV commands.

When receiving the BPP from the SM-DP+ 10, the LPA 11 sends the following standardized messages to the eUICC 12:
- (ES8+.InitialiseSecureChannel)
- (ES8+.ConfigureISDP)
- (ES8+.StoreMetadata)
- (ES8+.ReplaceSessionKeys)

These messages are sent on the ES8+ interface that is the interface defined between the Profile Package Binding function of the SMDP+ 10 and the eUICC 12. This interface is intended to be tunnelled over the ES9+ and ES10b interfaces. The ES10b is an interface defined between the LPD and ISD-R (LPA Services).

At step 22, the eUICC 12 requests the LPA 11 to load in the eSIM the profile elements. This is done at step 23 (LoadBoundProfilePackage) that is repeated N times until the eUICC 12 gets the entire BPP.

After step 21 to step 23, all exchanged messages between the LPA 11 and the eUICC 12 are APDU commands.

At step 24, the eUICC 12 notifies the LPA 11 of the result of the installation of the profile. The Profile Installation Result is created by the eUICC 12 after the execution of the last TLVs of the BPP.

At step 24, the LPA 11 notifies the SM-DP+ 10 of the result of the installation of the profile package (Handle Notification on ES9+ interface).

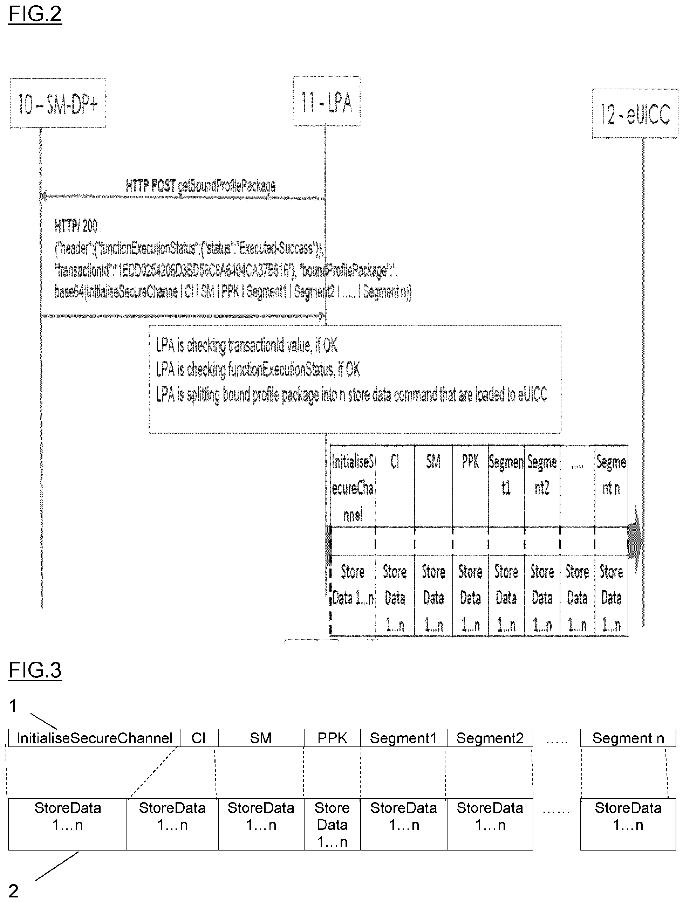

More precisely, in the known method, as represented in figure 2, the following steps are: There is a first HTTP POST "getBoundProfilePackage" (step 20) sent by the LPA 11 to the SM-DP+ 10.

The SM-DP 10 replies with: HTTP/ 200 JSON:
{"header":{"functionExecutionStatus":{"status":"Executed-Success"}},
"boundProfilePackage":"InitialiseSecureChannel I Cl I SM I PPK I Segment 1 I Segment 2 I ... I
Segment n","transactionID":"1EDD0254206D3BD56C8A6404CA37B616"}
The LPAd 11 is checking the transactionlD value, and if OK:
   The LPAd 11 is checking the functionExecutionStatus, and if OK:
   The LPAd 11 is splitting the bound profile package into n store data commands that are loaded to the eSIM 12.

Figure 3 represents the BPP 1 (Bound Profile Package) at the level of the SM-DP+ 10 and the SBPP 2 at the level of the LPA 11 (Profile Package Delivery to the eUICC 12).

The BBP 1 comprises different fields:
- An InitialiseSecureChannel field;
- A Cl field (Configure ISDP);
- A SM field (Store Metadata);
- A PPK field (Profile Protection Key);
- A plurality of segments 1 to n.

When receiving the BBP1, the LPA 11 delivers the SBPP 2 to the eUICC 12. The SBPP only comprises APDU commands "Store Data 1 to n", the terms "1 to n" being dedicated to each packet of data (the packets contain data that are concatenated).

One problem with this existing solution is that the size of the LPA 11 memory must be large enough to store the whole BPP at step 21.

This is not conceivable for IoT devices in particular.

Another problem is that the LPA 11 have to get full getBoundProfilePackage response before processing it and transfers it to the eUICC 12. First verification like transactionlD or metadata verifications could be done by managing only first chunks of data but this is not foreseen in the state of the art. Moreover loading profile segment on eUICC 12 could be done while LPA or IPA 11 is getting next segment saving some data transfer time with SMDP+ or elM.

The present invention proposes a solution to these problems.

More precisely, the invention proposes to implement a method according to the claims.

Other features and advantages of the invention will be described in regard of the figures that that represent:
- Figure 1 the method of downloading a profile from a SM-DP+ to a eUICC according to the state of the art;
- Figure 2 the BPP at the level of the SM-DP+ and the SBPP at the level of the eUICC;
- Figure 3 the method of downloading a profile from a SM-DP+ to a eUICC according to the state of the art, with more explanations;
- Figure 4 a simplified exchange of data between a SM-DP+ and a eUICC according to the invention for downloading a profile
- Figure 5 a simplified exchange of data between a SM-DP+ and a eUICC according to the invention for downloading a profile
- Figure 6 the exchanges between the different entities, according to the invention.

Figures 1, 2 and 3 have been described in regard to the state of the art.

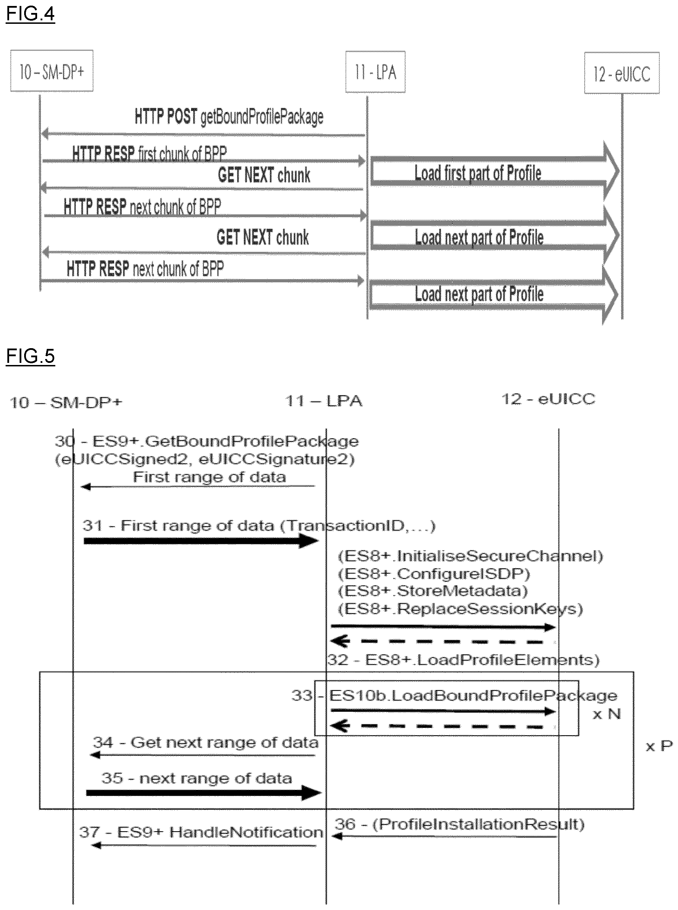

Figure 4 represents the method of downloading a profile from a SM-DP+ to a eUICC according to the invention (simplified description).

This figure represents the SM-DP+ 10, the LPA 11 and the eUICC 12.

The LPA 11 can send request to the SM-DP+ 10 to get chunks of protected bounded profile.

The LPA 11 loads a chunk of profile then requests a next chunk and so on until the end of profile loading.

The LPA 11 is then controlling the flow of data with the SM-DP+ 10 to save device memory usage.

To make this solution possible, the SM-DP+ 10 shall order json content according to process follow-up by the LPA 11 and allow partial response management (e.g. accept-range feature). It can be seen in figure 4 that the first request from the LPA 11 to the SM-DP+ 10 consists in downloading a profile (HTTP POST getBoundProfilePackage). But, as it will be seen later on, this request consists in asking only a first range of data (a first chunk) of the profile.

The SM-DP+ 10 answers to this request by: HTTP RESP first chunk of BPP.

This means that only a first chunk of data are transmitted from the SM-DP+ 10 to the LPA 11.

The LPA 11 then loads this first chunk of data in the eUICC 12.

The LPA 11 then requests to the SM-DP+ 10 to download the next chunk of the profile in a command "GET NEXT chunk". The SM-DP+ 10 answers to this request by "HTTP RESP next chunk of BPP".

The process continues as before described until the eUICC 12 gets the final part of the Profile.

The eUICC 12 has then received the entire Profile by chunks, this allowing to limit the memory space at the level of the LPA 11.

In summary, the invention proposes to download a profile from a SM-DP+ 10 to a secure element 12 cooperating with a terminal, the secure element or the terminal comprising a LPA 11. The method according to the invention comprises the following steps:
a - Sending from the LPA 11 to the SM-DP+ 10 a request to download a first range of data of the profile;
b - Downloading from the SM-DP+ 10 to the LPA 11 the first range of data of the profile;
c - Storing the first range of data of the profile in the secure element 12;
d - Sending from the LPA 11 to the SM-DP+ 10 a request to download the next range of data of the profile;
e - Downloading from the SM-DP+ 10 to the LPA 11 the next range of data of the profile;
f - Sending from the LPA 11 to the secure element 12 the next range of data of the profile;
g - Repeating steps -d- to -f- until the entire profile has been downloaded in the secure element 12.

In other words, the method of the invention consists in downloading from the SM-DP+ 10, at the request of the LPA 11, chunks of protected profiles, from the SM-DP+ 10 to the secure element 12 through the LPA 11, until the profile is entirely downloaded in the secure element 12.

Figure 5 represents the method of downloading a profile from a SM-DP+ to a eUICC according to the invention.

In a first step 30, the LPA 11 sends a request to the SM-DP+ 10:
GetBoundProfilePackage (eUICCSigned2, eUICCSignature2)
on the ES9+ interface. But here, contrarily to figure 1, the LPA 11 is requesting a first range of data instead of the entire Profile.

By receiving this request, the SM-DP+ 10 answers at step 31 by providing a TransactionlD and a first range of data to the LPA 11.

As in the state of the art, when receiving the answer from the SM-DP+ 10, the LPA 11 sends the following standardized messages to the eUICC 12 on the ES8+ interface:
- (ES8+.InitialiseSecureChannel)
- (ES8+.ConfigureISDP)
- (ES8+.StoreMetadata)
- (ES8+.ReplaceSessionKeys)

At step 32, the eUICC 12 requests the LPA 11 to load (in the eSIM) the received profile elements of the first range of data. This is done at step 23 (LoadBoundProfilePackage) that is repeated N times until the eUICC 12 gets the entire first range of data.

At step 24, the LPA 11 requests the SM-DP+ 10 to send the next range of data and the SM-DP+ 10 sends this next range to the LPA 11.

Steps 33 to 35 are executed P times, until the entire Profile has been sent to the eUICC 12. The latter then sends, at step 36 the result of the installation of the profile. The Profile Installation Result is created by the eUICC 12 after the execution of the last TLVs of the BPP. At step 37, the LPA 11 notifies the SM-DP+ 10 of the result of the installation of the profile package (Handle Notification on ES9+ interface).

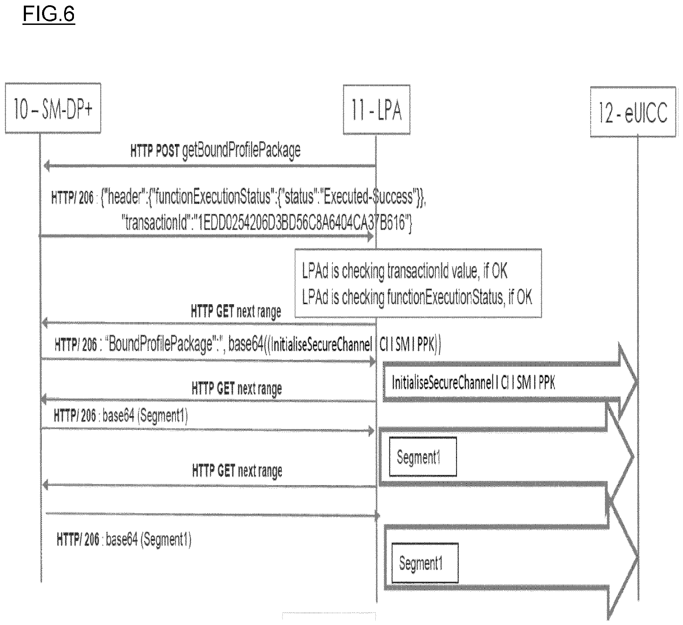

Figure 6 represents the commands and responses sent between the different entities according to the invention.

In this figure, to be considered in regard of figure 5, the LPA 11 sends a first HTTP POST "getBoundProfilePackage" to the SM-DP 10.

The SM-DP 10 needs to order keys (element) of JSON package in the same order of processing by the LPA 11. As the LPA 11 checks the transactionlD before loading the profile, the transactionlD shall come first.

Therefore, the SM-DP+ 10 sends a HTTP 1.1 / 206 JSON partial response :
{"header":{"functionExecutionStatus":{"status":"Executed-Success"}}, "boundProfilePackage":"InitialiseSecureChannel I CH I SM I PPK I Segment 1 I Segment 2 I ... I
Segment n","transactionID":"1EDD0254206D3BD56C8A6404CA37B616"}

The LPA 11 checks if the transactionlD value is OK and, if yes:
The LPA 11 checks the functionExecutionStatus, and if it is OK:
The LPA 11 is splitting bound profile package into n store data commands that are loaded to the eUICC 12:

| | | | |
|---|---|---|---|
| Store Data 1...n | Store Data 1...n | Store Data 1...n | Store Data 1...n |

Then the LPA 11 is fetching the next range of Data of boundProfilePackage:
"HTTP GET next range"

And the SM-DP+ 10 answers with:
HTTP 1.1 / 206 partial response:

| | |
|---|---|
| Segment 1 | Segm |

Where "Segm" is a part of a segment (not a complete segment as shown in figures 2 and 3). It contains only a part of data of a complete segment. This "Segm" is kept by the LPA 11 until it receives the entire segment which "Segm" contains the first bytes of the segment.

Then the LPA 11 is splitting bound profile package into n store data commands that are loaded to the eUICC 12:

| | |
|---|---|
| Store Data | 1...n |

Then the LPA 11 is fetching a next range of data of boundProfilePackage and so on until the entire profile package has been downloaded.

Thus, the LPA 11 can send a partial request to the SM-DP+ 10 to get a first chunk of a protected bounded profile. The process it then to request a next chunk and so on, until the end of profile loading.

The LPA 11 is controlling the flow of data with the SM-DP+ 10 to save device memory usage. The invention can be implemented by different ways but it is preferable to use Json (JavaScript Object Notation): The SM-DP+ 10 orders Json content according to process follow-up by the LPA 11.

It means that the response to getBoundProfilePackage shall be a Json file starting by either header or transactionlD and ending with boundProfilePackage.

The SM-DP+ 10 should support HTTP accept-range requests from HTTP client (LPA 11).

The invention applies preferably to loT devices having limited memory.

The invention also allows to interrupt the loading of chunks if a PE error is detected, thus saving traffic and battery life of the loT device.

The invention applies to MultiSIM CE (Consumer Equipment) applied to loT devices (GSMA eSIM secure element).

## Claims

1. A method for downloading an entire profile from a SM-DP+ (10) to a secure element (12) cooperating with a terminal, said secure element or said terminal comprising a LPA (11), wherein said method comprises:
a - Sending from said LPA (11) to said SM-DP+ (10) a request to download a first range of data of said entire profile;
b - Downloading from said SM-DP+ (10) to said LPA (11) said first range of data of said entire profile;
c - Storing said first range of data of said entire profile in said secure element (12);
d - Sending from said LPA (11) to said SM-DP+ (10) a request to download the next range of data of said entire profile;
e - Downloading from said SM-DP+ (10) to said LPA (11) said next range of data of said entire profile;
f - Sending from said LPA (11) to said secure element (12) said next range of data of said entire profile;
g- Repeating steps -d- to -f- until said entire profile has been downloaded in said secure element (12).

2. A method according to claim 1, wherein said terminal is an loT device or a consumer product and/or elM 10, eSIM Remote Manager, a LPA (11) or an IPA, lot Profile Assistant, or an IPAe, IPA located in a eUICC.

3. A method according to claim 1 or 2, wherein said secure element is one of:
- An eUICC;
- An iUICC;
- An UICC.
